# EUROPEAN PATENT APPLICATION

(11) **EP 2 058 930 A1**
(43) Date of publication of application: **13.05.2009**
(21) Application number: 08168779.0
(22) Date of filing: 10.11.2008
(51) Int. Cl.: H02M 3/335

(54) **Mixed flyback-forward topology converter with reduced ripple current.**

(30) Priority: 08.11.2007 US 937373
(71) Applicant: Honeywell International Inc., Morristown, NJ 07962 (US)
(72) Inventor: Senaj, Viliam, 82102 Bratislava (SK)
(74) Representative: Buckley, Guy Julian

(57) **Abstract**

A mixed flyback-forward topology converter includes a transformer having a core, a primary winding, a first secondary winding and a second secondary winding. A switch connects power to the primary winding. A forward stage is connected to the first secondary winding. A flyback stage is connected to the second secondary winding. An output voltage is provided by the flyback stage when the switch is in an off state and by the forward stage when the switch is in an on state.

## Description

### BACKGROUND OF THE INVENTION

The present invention generally relates to the field of power converters and transformers and, more particularly, to ripple current reduction in transformer circuits.

As varieties of electronic devices proliferate, the specific demands made on power supply components grow widely. A variety of parameters may be desired to accommodate the needs of devices and components receiving power from a transformer. The specific demands of these electronic devices may be managed by choices in the design of the transformer circuit. For example, buck and boost, flyback, forward and other familiar transformer circuit designs may be implemented.

One variable of concern in the use of a flyback converter is the output ripple voltage. Voltage tolerances of elements or components of the load devices receiving power from a flyback converter may require stable voltages. The output ripple voltage of a typical flyback converter is generally proportional to the output current and inversely proportional to switching frequency, output filtering capacitance value, and the overall converter impedance.

In designing a solution, reducing the output ripple voltage is typically achieved by using large output filtering capacitance values. Increases in capacitance generally mean increases in the spatial proportions of the capacitor or capacitors, increases in the weight of the capacitor or capacitors and increases in the cost of the capacitor or capacitors. When electronic designs demand more power and smaller variations in the currents and voltages the devices need, changes in the capacitance may be insufficient to meet the requirements for stable power.

Flyback topology has enjoyed widespread popularity due to the typical simplicity of the circuit. The flyback transformer circuit topology provides isolation between the input side of the circuit and the output side of the circuit. This isolation protects the power source connected to the input side of the transformer circuit from damage in the case of a short circuit condition developing at the output side of the transformer circuit. The transformer is generally formed with windings surrounding a ferro-magnetic core. With use, the ferro-magnetic core is subjected to magnetic forces generated by current in the windings. In a flyback transformer circuit, the ferro-magnetic core becomes increasingly magnetized. As the magnetization of the ferro-magnetic core increases, variance in the magnetic fields generated by the current in the winding becomes increasingly limited, reducing the performance of the transformer. The loss of performance means that larger currents are required to provide the same voltage.

The performance characteristics of a flyback transformer circuit may be improved with optimizations of the impedance values of the elements of the circuit. Some aspects of the circuit, for example, specifics of the coil winding of the transformer, are not available for optimization when available off-the-shelf transformers are used. The use of standard components may reduce costs but may also result in a reduced primary current dl/dt slope and consequently in a reduced operating frequency and reduction of available output power.

When a switching component in a flyback transformer circuit is switched off, the transformer experiences a leakage inductance that may generate a voltage overshoot. The voltage overshoot generated is proportional to the leakage inductance value and the current at switching-off. Increases in current requirements result in the need to implement switching with an increased voltage rating to accommodate the voltage overshoot.

As can be seen, there is a need for a transformer circuit that can be operated at lower voltages and at higher frequencies to provide a stable source of isolated power with reduced ripple output voltages.

### SUMMARY OF THE INVENTION

A flyback-forward transformer circuit comprises a transformer having a core, a primary winding, a first secondary winding and a second secondary winding. A switch is connected to the primary winding. A forward stage is connected to the first secondary winding and a flyback stage is connected to the second secondary winding. An output voltage is provided by the flyback stage when the switch is in off state and by the forward stage when the switch is in on state

A bipolar flyback-forward transformer circuit comprises a transformer having a core, a primary winding, a first secondary winding and a second secondary winding and a switch connected to the primary winding. A first flyback stage is connected to the first secondary winding. A first forward stage is connected to the first secondary winding. A second flyback stage is connected to the second secondary winding and a second forward stage is connected to the second secondary winding. A first output voltage is provided by the first forward stage and a second output voltage is provided by the second forward stage when the switch is in an on state and the first output voltage is provided by the second flyback stage and the second output voltage is provided by the first flyback stage when the switch is in an off state

A power module comprises a transformer having a core, a primary winding, a first secondary winding and a second secondary winding and a switch connected to the primary winding. A forward stage is connected to the first secondary winding and includes an energy storage inductance, a first diode connected between a first node on the first secondary winding and the energy storage inductance and a second diode connected between a second node on the first secondary winding and the energy storage inductance. An output capacitance is charged through the energy storage inductance and provides an output voltage. A flyback stage is connected to the second secondary winding including a diode connected between a first node of the second secondary winding and the output capacitance. The output voltage is provided by the flyback stage when the switch is in an off state and by the forward stage when the switch is in an on state.

These and other features, aspects and advantages of the present invention will become better understood with reference to the following drawings, description and claims.

### BRIEF DESCRIPTION OF THE DRAWINGS

Figure 1 is a block diagram depicting an electrically powered system in accordance with an embodiment of the present invention;

Figure 2 is a circuit diagram depicting a simplified circuit of a flyback-forward topology in accordance with an embodiment of the present invention;

Figure 3 is a detailed circuit diagram depicting flyback-forward topology in accordance with an embodiment of the present invention;

Figure 4 is a circuit diagram depicting a bipolar flyback-forward topology in accordance with an embodiment of the invention;

Figure 5 is a graph depicting the transformer primary voltage of flyback and flyback-forward topologies in accordance with an embodiment of the invention;

Figure 6 is a graph depicting the zoom of output voltage ripple of flyback and flyback-forward topologies in accordance with an embodiment of the invention;

Figure 7 is a flowchart depicting a method of operation for a flyback-forward transformer circuit topology in accordance with an embodiment of the invention; and

Figure 8 is a flowchart depicting a method of operation for a bipolar flyback-forward transformer circuit topology in accordance with an embodiment of the invention.

### DETAILED DESCRIPTION OF THE INVENTION

The following detailed description is of the best currently contemplated modes of carrying out the invention. The description is not to be taken in a limiting sense, but is made merely for the purpose of illustrating the general principles of the invention, since the scope of the invention is best defined by the appended claims.

Broadly, the present invention is a transformer circuit having multiple secondary windings configured to provide power during both the positive and negative operational states. A transformer circuit in accordance with embodiments of the invention may be particularly useful to supply power to electronic devices such as printers. A power supply for a printer may require specific operational characteristics such as output voltage stability with a low input current.

A typical flyback transformer includes a secondary winding that generates an output voltage of one polarity when the switch is in an on state and the current in the primary winding increases and hence the transformer core magnetization increases. When the switch in the primary side is switched off, the core magnetization decreases and the magnetic flux change generates an inverted output voltage on the secondary winding and delivers the output current. In contrast with standard transformer circuits, the flyback-forward transformer circuit includes two secondary windings with opposite polarity, so that one secondary winding contributes to the output current when the core magnetization increases and the other secondary winding contributes to the output current when core magnetization decreases. In accordance with another embodiment, when one secondary winding generates an output voltage, the other secondary winding generates an inverted output voltage, so that both an output voltage and an inverted output voltage are generated simultaneously. In accordance with an embodiment of the present invention, integration of the flyback and forward transformer circuit topologies, stable output voltages are generated using smaller input currents and output ripple voltages than can be realized with standard transformer circuits.

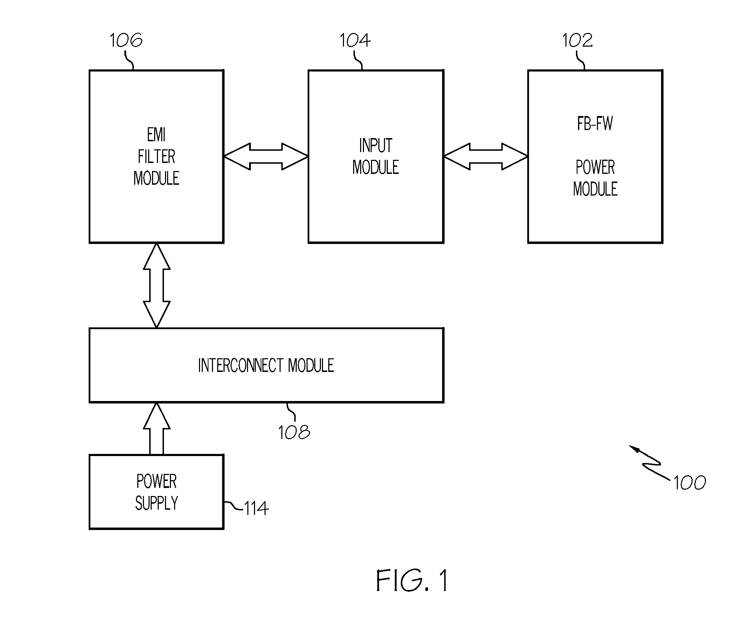

With reference to Figure 1, a system diagram of a power assembly 100 for an electronic device such as a printer in accordance with an embodiment is shown. An interconnect module 108 provides a physical interface to receive source power from a raw power source 114. The raw power source 114 may typically be a 120V AC electrical power supply, or any other suitable power source. The interconnect module 108 may supply the source power through an EMI filter module 106 which reduces the presence of electromagnetic interference in the source power. An input module 104 receives the EMI filtered AC power from the EMI filter module 106, converts the AC power to DC and provides DC voltages to input leads of the flyback-forward power module 102. A flyback-forward power module 102 converts the DC input voltages to stable, isolated DC output voltages.

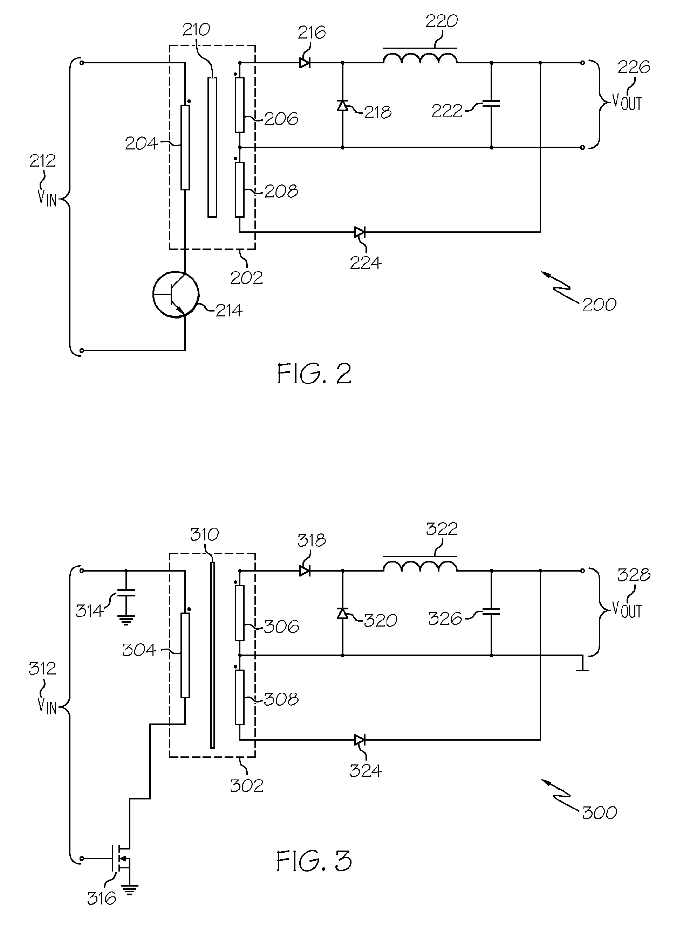

With reference to Figure 2, a circuit diagram of a simplified flyback-forward converter 200 in accordance with one embodiment is shown. A power source 212 supplying a DC voltage may be connected to the input leads of a transformer 202 through a switching component 214. Switching component 214 may be a transistor, a metal-oxide semiconductor field effect transistor (MOSFET) or any other suitable electrical switch. Transformer 202 includes a primary winding 204 forming the input leads of the transformer 202 so that a current flows through the primary winding when a voltage may be present at the input leads. The transformer 202 includes secondary windings 206 and 208 that inductively generate voltages in response to the current in the primary winding 204 and hence the transformer core 210 magnetization changes. The primary and secondary windings 204, 206, and 208 are formed with wire wound around a ferro-magnetic core 210.

One end of the first secondary winding 206 may be connected through diode 216 so that positive current may be provided to an energy storage inductor 220 and output capacitor 222 and negative current may be blocked by reverse-biased diode 216.

One end of the second secondary winding 208 may be connected through diode 224 to output capacitor 222. Diode 224 allows positive current to flow from the second secondary winding 208 when diodes 216 prevents the flow of negative current from the first secondary winding 206. The current flowing through energy storage inductor 220 charges output capacitor 222, Diode 218 provides the path for the freewheeling current of the energy storage coil 220 when the diode 216 is reverse biased. The output capacitor 222 is connected to ground at one end and to the currents alternately provided by the first secondary winding 206 and the second secondary winding 208 at the other end. The output capacitance 222 reduces variations in the output voltage 226..

With reference to Figure 3, a detailed circuit diagram of a fly-back-forward converter 300 is shown. A power source 312 supplying a DC voltage may be connected across the input leads of a transformer 302. The voltage may be regulated using a field effect transistor 316 connected between ground and the transformer 302. A capacitance 314 may be connected to the lead end of the transformer 302 to reduce transients in the input voltage. Transformer 302 includes a primary winding 304 forming the input leads of the transformer 302 so that a current flows through the primary winding when a voltage may be present across the input leads. The transformer 302 includes secondary windings 306 and 308 that inductively generate voltages in response to the current change in the primary winding 304. The primary and secondary windings 304, 306, and 308 are formed with wire wound around a ferro-magnetic core 310. The magnetic properties of the ferro-magnetic core 310 slow the effects of the change of current in the primary winding 304 and the secondary windings 306 and 308.

An end of the first secondary winding 306 may be connected to diode 318 so that the voltage generated inductively in the first secondary winding 306 by the changes of the transformer core 310 magnetization due to current in the primary winging 304 provides a current flow to an energy storage inductor 322 and output capacitor 326. When switch 316 is in off state and the transformer core 310 magnetization decreases, the diode 318 became reverse biased and the current from the energy storage coil 322 continue to flow to the output capacitor 326 through diode 320 until the energy reaches zero or the polarity on first secondary coil 306 reverses

The second secondary winding 308 may be connected so that the polarity of the secondary windings 308 and 306 are opposite, such that when a positive voltage may be generated in the first secondary winding 306, a negative voltage may be generated in the second secondary winding 308. One end of each of the secondary windings 306 and 308 may be grounded. The other end of the second secondary winding 308 may be connected through diode 324 to the output capacitor 326. Diode 324 allows current produced by the second secondary winding 308 to flow to the output capacitor 326 when diode 318 prevents the flow of current from the first secondary winding 306. The output capacitor 326 receives current alternately from the first secondary winding 306 and the second secondary winding 308 and thereby generates an output voltage 328. An output capacitor 326 may be connected between the trailing end of the energy storage inductor 322 and ground, thereby reducing variations in the output voltage 328..

In operation, during an on-state of the power switch 316, the current in the primary winding 304 of the transformer 302 increases. The transformer core may be magnetized by the current and subsequently demagnetized when the current may be blocked by switching the field-effect transistor (FET) 316 to an off state. The change in magnetization generates induced voltages on both secondary windings 306 and 308. The polarity of voltage in the first secondary winding 306 will be opposite to the polarity of voltage in the second secondary winding 308. Positive voltage induced on the secondary winding 306 pass through diode 318. Negative voltage induced in the secondary winding 306 is blocked by diode 318. The passed positive current is delivered through an energy storage inductor 322 that accumulates energy and slows down the current rate change. The current charges output capacitor 326. When a positive voltage may be generated by first secondary winding 306, a negative voltage may be generated by second secondary winding 308. The negative voltage generated across the second secondary winging 308 may be blocked by a reverse biased diode 324.

When the switch 316 is moved into the off-state, the polarity of the voltages generated across the secondary windings 306 and 308 reverse. The positive voltage generated by the second secondary winding 308 finds diode 324 open and the current generated by the secondary winding 308 charges the output capacitor 326. Diode 318 may be closed to the negative voltage generated by the first secondary winding 306.

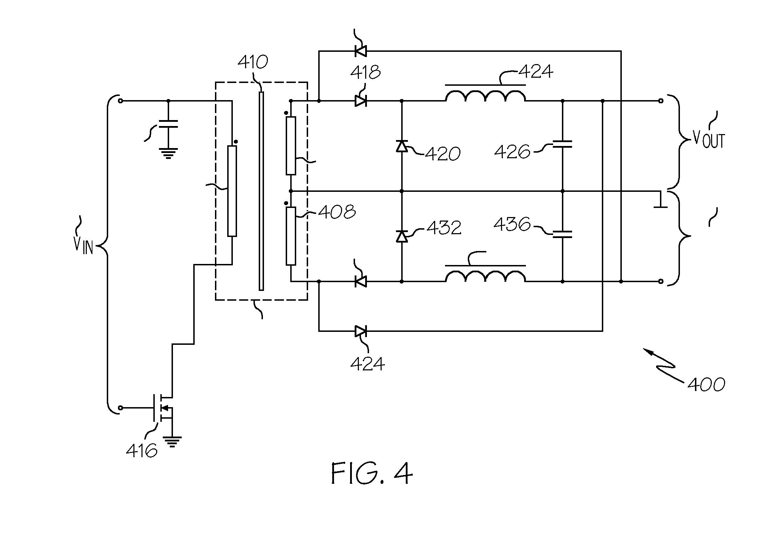

With reference to Figure 4, a circuit diagram of a bipolar flyback forward converter 400 is shown. The bipolar flyback-forward converter provides both a positive and a negative voltage at the same time. Rather than connecting the second secondary winding 408 to the output capacitor 426 and simply blocking the negative voltages generated by the second secondary winding 408 using a reverse-biased diode 424, the second secondary winding 408 may be also connected to provide the negative voltage to a second energy storage coil 434 and an output capacitor 436. A diode 432 provides a path for a second energy storage coil 434 freewheeling current. The negative voltage generated by the first secondary winding 406 involves a current to charge an output capacitor 436 through a diode 438.

Mixed flyback-forward (FB-FW) converter circuit topology delivers output current during both the on and off state of the switching component 416, which may reduce requirements for raised output filter capacitor values while limiting the output ripple voltages across the output capacitors 426 and 436. The basic element may be a flyback transformer 402 with two secondary windings 406 and 408, where during each state of the switch 416, one of the secondary windings generates power in the flyback mode and the other secondary winding generates power in the forward mode.

Since part of energy may be delivered during the switching component on-state, the amount of energy stored in the transformer core 410 may be reduced, resulting in smaller core saturation and associated losses. Because magnetization is lower, the demagnetization requires less time, the switch 416 can employ shortened off-state duration and consequently a higher switching frequency is possible when compared to a typical flyback topology and the output ripple voltage may be further reduced.₋When operating at a core saturation level comparable to that of a typical flyback topology, the maximum available output power may be increased. In a quasi-resonant mode the switching component 416 is switched on at minimum voltage of dumped oscillation between leakage inductance of primary winding 404 and leakage capacitance of the switch 416 and in such a way reduces the switching on loses.

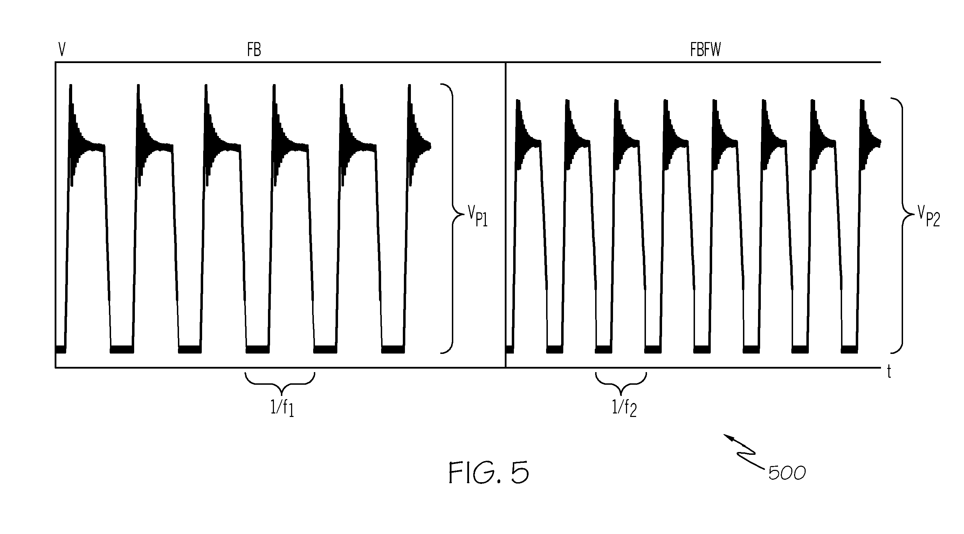

The weakened core magnetization results in a lower magnetization current with as a consequence reduced voltage overshot during transistor switching-off. This allows the use of lower switching transistor voltage rating and reduces the power stress and hence provides higher system reliability.
With reference to Figure 5, a simplified graph 500 represents the voltage across primary winding of a transformer of typical flyback topology and transformer 302 of a flyback-forward in accordance with an embodiment. The peak-to-peak primary voltage is reduced by approximately by 10% in flyback-forward topology in comparing to the flyback one. The frequency of the flyback transformer switching may be measured at approximately 55.12 kHz. The frequency of the flyback-forward transformer switching may be measured at approximately 74.82 kHz, almost a fifty-percent increase in operating frequency. Both frequencies corresponds to a free run frequency in quasi-resonant mode and with the same input and output voltages and the same output current

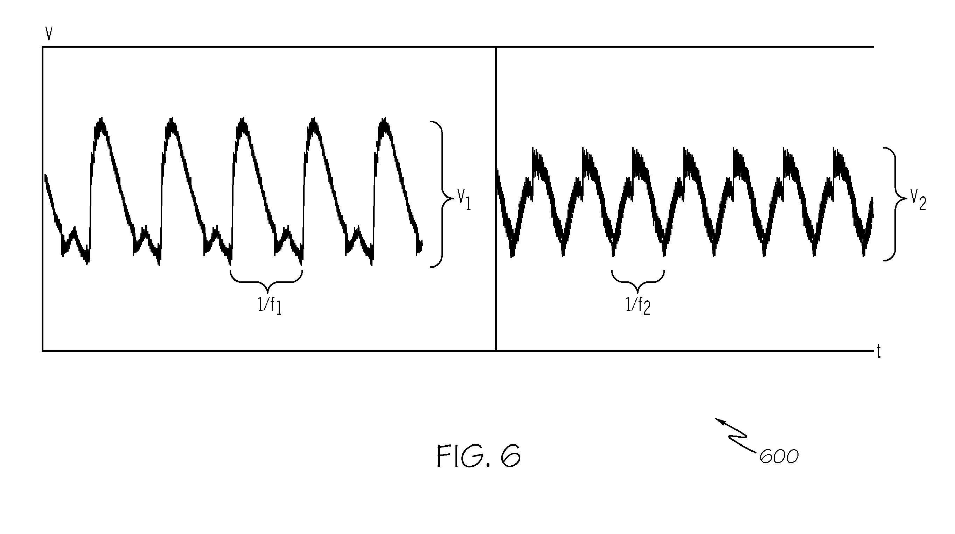

With reference to Figure 6, a simplified graph 600 represents the zoom of the output voltage across the output capacitance of a typical flyback transformer circuit topology and the output voltage across output capacitance 326 of a flyback-forward transformer circuit topology in accordance with an embodiment. The peak-to-peak output voltage ripple of the flyback topology may be measured at approximately 40 mV. The output voltage ripple of the flyback-forward topology may be measured at approximately 28 mV, a thirty percent reduction.

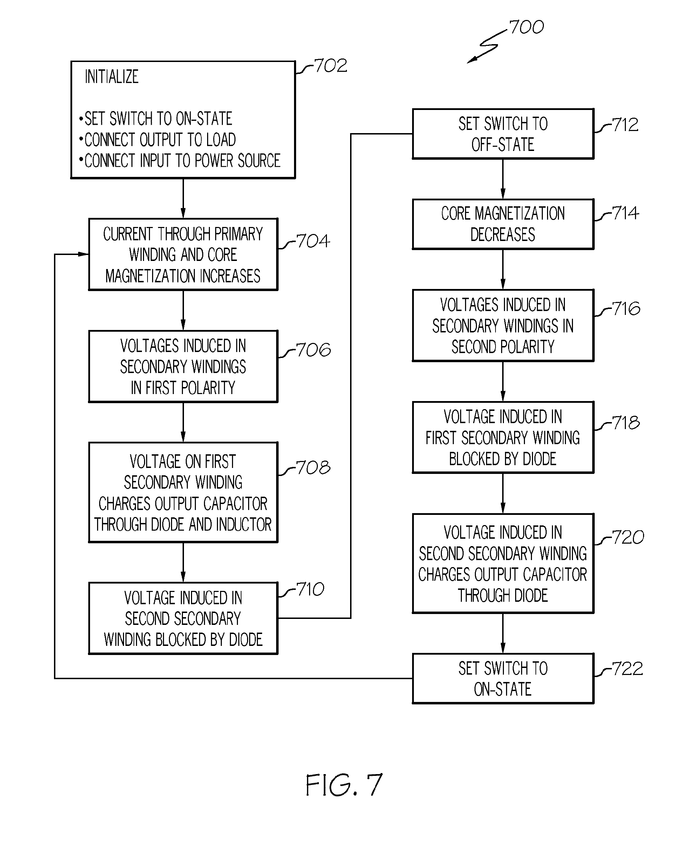

With reference to Figure 7, a flowchart for a method 700 of the operation of a flyback-forward transformer circuit is shown. The transformer circuit (e.g., circuit 200) may be initialized at function block 702 by setting the switch 214 to the on state, connecting the output 226 to a load and connecting the input 212 to a power source. Current rises through the primary winding 204 of the transformer 202 at function block 704. Magnetic flux increase of the transformer core 210 generates the voltages in the secondary windings 206, 208 at function block 706. The current due to voltage induced in the first secondary winding 206 charges an output capacitor 222 and provides an output voltage 226 at function block 708. The voltage induced in the second secondary winding 208 may be blocked by a reverse-biased diode 224 at function block 710.

The switch 214 may be set to the off state at function block 712. Magnetic flux of the transformer core 210 decreases in response to the shut-off voltage at function block 714. Voltages are generated in the secondary windings 206, 208 in response to the magnetic flux change of the transformer core 210 at function block 716. The voltage generated in the first secondary winding 206 may be blocked by a reverse-biased diode 216 at function block 718. The voltage generated in the second secondary winding 208 involves the current charging the output capacitance 222 at function block 720. The switch may be returned to the on state at function block 722 and the process cycles, returning to function block 704.

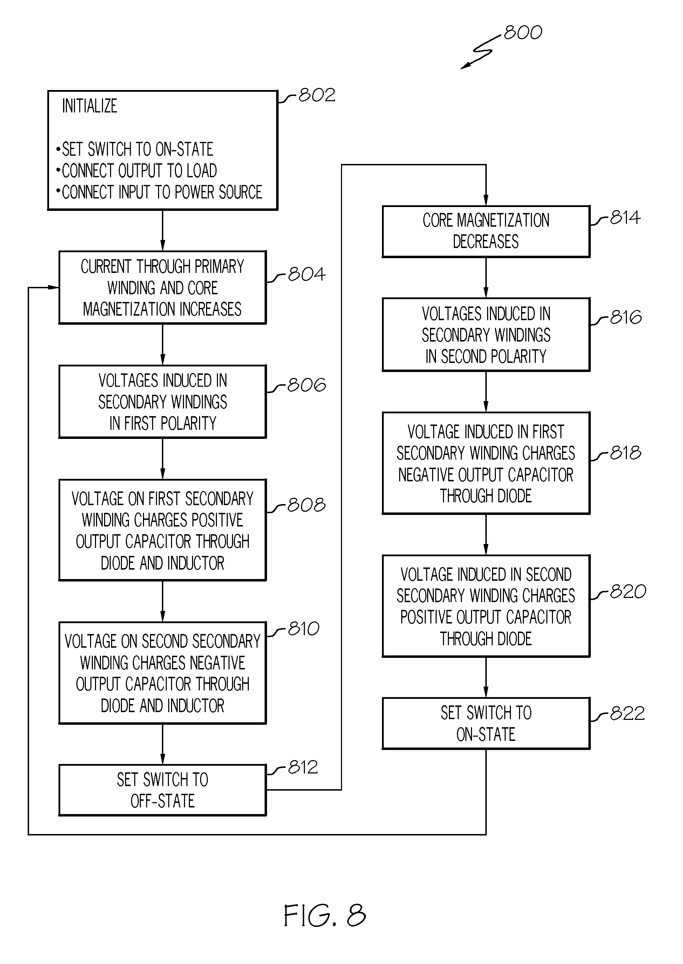

With reference to Figure 8, a flowchart of a method 800 of operation of a bipolar flyback-forward transformer circuit (e.g., circuit 400) is shown. The transformer circuit (e.g., circuit 400) may be initialized at function block 802 by setting the switch 416 to the on state, connecting the outputs 428 and 440 to a load and connecting the input 412 to a power source. Current rises through the primary winding 404 of the transformer 402 at function block 804. Magnetic flux increase of the transformer core 410 induces voltages in the secondary windings 406, 408 at function block 806. The current due to voltage induced in the first secondary winding 406 charges an output capacitor 426 and provides an output voltage 428 at function block 808. The current due to voltage induced in the second secondary winding 408 charges an output capacitor 436 and provides an output voltage 440 at function block 810

The switch 416 may be set to the off position at function block 812. Magnetic flux of the transformer core 410 reduces in response to the shut-off voltage at function block 814. Voltages are generated in the secondary windings 406, 408 in response to the magnetic flux of the transformer core 410 change at function block 816. The current due to voltage induced in the first secondary winding 406 charges an output capacitor 436 and provides an negative output voltage 440 at function block 818. The current due to voltage induced in the second secondary winding 408 charges an output capacitor 426 and provides a positive output voltage 428 at function block 820. The switch may be returned to the first position at function block 822 and the process cycles, returning to function block 804.

It should be understood, of course, that the foregoing relates to exemplary embodiments of the invention and that modifications may be made without departing from the spirit and scope of the invention as set forth in the following claims.

## Claims

1. A flyback-forward transformer circuit (200) comprising:
a transformer (202) having a core (210), a primary winding (204), a first secondary winding (206) and a second secondary winding (208);
a switch (214) connected to the primary winding (204);
a flyforward stage connected to the first secondary winding (206);
a flyback stage connected to the second secondary winding (208);
wherein an output voltage (226) is provided by the flyback stage when the switch (214) is in a first state and by the flyforward stage when the switch (214) is in a second state.

2. The flyback-forward transformer circuit (200) of claim 1, wherein said flyforward stage includes an energy storage inductance (220).

3. The flyback-forward transformer circuit (200) of claim 2, wherein said flyforward stage comprises a first diode (216) connected between a first node on the first secondary winding (206) and the energy storage inductance (220) and a second diode (218) connected between a second node on the first secondary winding (206) and the energy storage inductance (220).

4. The flyback-forward transformer circuit (200) of claim 2, wherein said energy storage inductance (220) is connected to an output capacitance (222).

5. The flyback-forward transformer circuit (200) of claim 1, wherein said flyback stage includes a diode (224) connected between a first node of the second secondary winding (208) and an output capacitance (222).
